# EUROPEAN PATENT APPLICATION

(11) **EP 4 332 457 A1**
(43) Date of publication of application: **06.03.2024**
(21) Application number: 23194634.4
(22) Date of filing: 31.08.2023
(51) Int. Cl.: F24H 8/00

(54) **DRAINAGE APPARATUS**

(30) Priority: 31.08.2022 TR 202213626
(71) Applicant: Daikin Europe N.V., 8400 Oostende (BE)
(72) Inventor: TÜR, Volkan, 54300 Hendek (TR)
(74) Representative: Brantsandpatents bv

(57) **Abstract**

The present invention relates to a drainage apparatus (10) for condensing boilers (1), comprising a first tubular fluid channel (16) having a condensing fluid inlet (11) connected to condensing heat exchanger (30) at one opening of said first tubular fluid channel (16) and a condensing fluid outlet (12) connected to syphon mechanism (20) at the other opening of said first tubular fluid channel (16), and a second tubular fluid channel (17) which is connected from the side of said first tubular fluid channel (16) to the interior of said first tubular fluid channel (16) and extends parallel to the first tubular fluid channel (16) inside the first tubular fluid channel (16).

## Description

### Technical Field

The present invention relates to a drainage apparatus for condensing boilers.

In particular, the invention discloses a drainage apparatus comprising a first tubular fluid channel and a second tubular fluid channel inside the first tubular fluid channel, which allows fluids to be discharged from boiler.

### State of The Art

Condensing boilers have a function to condense water vapor in the exhaust gases and so recovering its latent heat of vaporization, which would otherwise have been wasted. It is known that condensation water formed as a result of combustion in the condensing boilers must be discharged from combustion chamber to drainage. Combustion chamber contains pressurized exhaust gases which should be discharged via flue system. The main function of condensate syphon mechanism is to remove condensate water from combustion chamber without any flue gas leakage/discharge.

On the other hand, some boiler manufacturers equip their products with accumulation pan in order collect water comes from fresh air intake path, such as rainwater and to discharge this accumulated water out of the of the boiler. In that case, it is required to use specially designed double inlet syphons, one of which is used for condensate water and the other is for accumulated water inside the hermetic cabin of boiler. For this reason, single-entry syphons designed only for the discharge of condensate are not suitable for the discharge of water accumulated in the boiler.

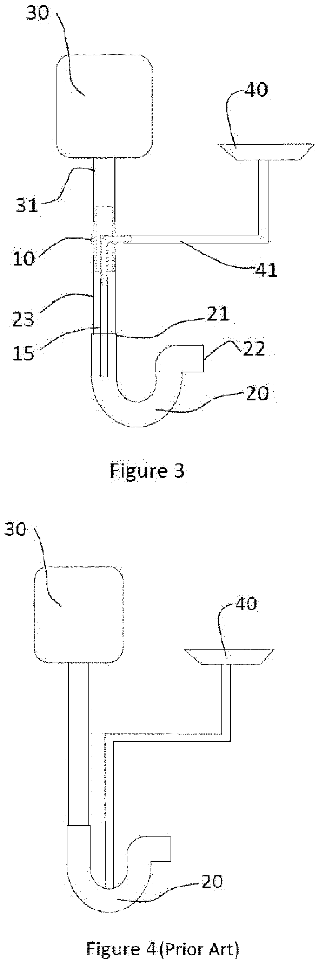

Currently used single-entry syphons are designed only for the discharge of condensate and cannot be used alone to discharge the water accumulated in the boiler. In the prior art embodiment shown in Figure 4, the condensate fluid coming from the condensing heat exchanger (30) to one inlet of the double inlet syphon mechanism is conveyed to the syphon mechanism (20) via a pipe. The water that has accumulated in the boiler coming from the accumulation tank (40) to the other inlet is transported through a separate pipe, and the fluids are discharged.

For this reason, it needed the necessity of equipping with an equipment for the discharge of the accumulated water in the boiler. Furthermore, boiler manufacturers who will use an equipment to collect the water coming from the chimney into the boiler, require that the boiler manufacturers design or use a new syphon for the discharge of this water.

In the patent No. GB2433580A, a device designed to collect rainwater or condensate water is mentioned. However, our invention is designed to ensure that the collected water is discharged from the boiler.

The utility model No. CN210267743U describes a complete system designed for the collection and discharge of condensate water and rainwater. However, the method and details of the evacuation route are not defined.

The patent No. KR200198035Y1 relates to a gas boiler. In particular, in condensing gas boilers, a gas boiler that is designed to take in the air required for combustion and to properly discharge the gases that must be discharged from the inside to the outside is mentioned.

In the patent No. FR2998648A1, relates to the general area of smoke installations. In particular, the chimney installation designed for mass housing is mentioned.

In all aforementioned documents given above, issues related to the evacuation of collected rain and condensate waters or gases are mentioned, but no information is given about the solution provided by our invention. As a result, it was necessary to come up with a suitable solution that performs the same function but does not contain the existing disadvantages, instead of the evacuation apparatus used in units such as chimneys and boilers.

### Objectives and Brief Description of the invention

The aim of the present invention is to obtain a drainage apparatus that allows both the condensate water and the water accumulated in the boiler to be discharged through the same discharge channel.

In order to achieve above object, present invention is a drainage apparatus for condensing boilers, comprising
- a first tubular fluid channel comprising a condensing fluid inlet connected to condensing heat exchanger at one opening of said first tubular fluid channel and a condensing fluid outlet connected to syphon mechanism at the other opening of said first tubular fluid channel,
- a second tubular fluid channel which is connected from the side of said first tubular fluid channel to the interior of said first tubular fluid channel and extends parallel to the first tubular fluid channel inside the first tubular fluid channel.

In the preferred embodiment of the invention, said second tubular fluid channel comprises an accumulated fluid inlet communicated with an accumulation tank, and an accumulated fluid outlet communicated with the syphon mechanism.

In another preferred embodiment of the present invention, the drainage apparatus comprises an exchanger pipe positioned between the condensing heat exchanger and the condensing fluid inlet so that the condensing fluid is transported to the first tubular fluid channel.

The first tubular fluid channel and the second tubular fluid channel in the invention being concentric.

In the preferred embodiment of the invention, the drainage apparatus comprises an extension pipe positioned as one end of which is connected to the accumulated fluid outlet and the other end is immersed in the fluid in the syphon mechanism so that the rainwater coming from the accumulation tank is transmitted to the fluid accumulated in the syphon mechanism.

The drainage apparatus also comprises a transfer pipe positioned between the condensing fluid outlet and the syphon mechanism so that the condensed fluid is transported to the syphon mechanism.

In order to achieve above object, present invention is also a condensing boiler, for condensing water vapor in the exhaust gases, comprising a condensing heat exchanger, an accumulation tank, a syphon mechanism and a drainage apparatus mentioned in above paragraphs.

### Brief Description of the Figures

In Figure 1; exterior side view of the drainage apparatus in preferred embodiment is shown.
In Figure 2; internal cross-sectional view of the drainage apparatus in preferred embodiment is shown.
In Figure 3; mounted view of drainage apparatus in preferred embodiment is shown.
In Figure 4; prior art view of water drainage apparatus mounted on system is shown.

### Reference List

- 1: Condensing boiler
- 10: Drainage apparatus
- 11: Condensing fluid inlet
- 12: Condensing fluid outlet
- 13: Accumulated fluid inlet
- 14: Accumulated fluid outlet
- 15: Extension pipe
- 16: First tubular fluid channel
- 17: Second tubular fluid channel
- 20: Syphon mechanism
- 21: Syphon inlet
- 22: Syphon discharge
- 23: Transfer pipe
- 30: Condensing heat exchanger
- 31: Exchanger pipe
- 40: Accumulation tank
- 41: Tank pipe
- C: Central axis

### Detailed Description of the invention

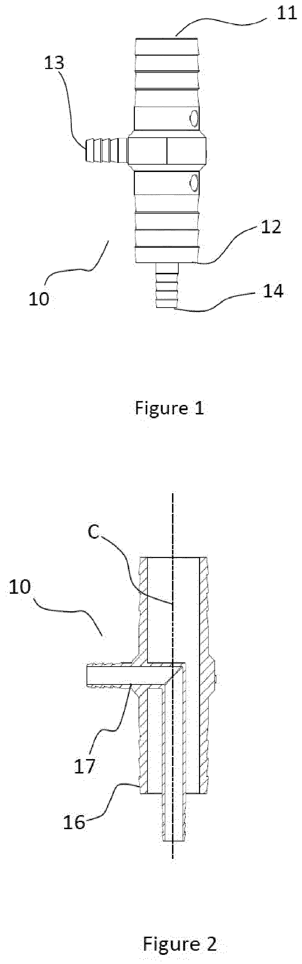

The invention discloses a drainage apparatus (10) based on the principle of discharging liquids from two different sources from the same and single outlet. The drainage apparatus (10) mainly comprises a first tubular fluid channel (16) and a second tubular fluid channel (17) as seen in Figure 2. This first tubular fluid channel (16) and the second tubular fluid channel (17) are mounted to each other as to form a watertight structure. This first tubular fluid channel (16) and the second tubular fluid channel (17) are extending parallel and downwardly preferably being concentric with their central axis (C). The drainage apparatus (10) preferably made of hard plastic.

According to Figures 1 and 3, the first tubular fluid channel (16) comprises a condensing fluid inlet (11) connected to condensing heat exchanger (30) at one opening of said first tubular fluid channel (16) and a condensing fluid outlet (12) connected to syphon mechanism (20) at the other opening of said first tubular fluid channel (16). The second tubular fluid channel (17) is connected from the side of said first tubular fluid channel (16) to the interior of said first tubular fluid channel (16) and extends parallel to the first tubular fluid channel (16) inside the first tubular fluid channel (16).

As seen in Figure 3, the second tubular fluid channel (17) comprises an accumulated fluid inlet (13) communicated with an accumulation tank (40), and an accumulated fluid outlet (14) communicated with a syphon mechanism (20). The drainage apparatus (10) also comprises an exchanger pipe (31) positioned between the condensing heat exchanger (30) and the condensing fluid inlet (11) so that the condensed fluid is transported to the first tubular fluid channel (16).

Besides, it comprises an extension pipe (15) positioned as one end of which is connected to the accumulated fluid outlet (14) and the other end is immersed in the fluid in the syphon mechanism (20) so that the rainwater coming from the accumulation tank (40) is transmitted to the fluid accumulated in the syphon mechanism (20). In one embodiment, the drainage apparatus (10) comprises a transfer pipe (23) positioned between the condensing fluid outlet (12) and the syphon mechanism (20) so that the condensed fluid is transported to the syphon mechanism (20).

According to the embodiment shown in Figure 3, a condensing boiler (1) comprises a condensing heat exchanger (30), an accumulation tank (40), a syphon mechanism (20) and a drainage apparatus (10). In order to carry the condensate water to the syphon mechanism (20), the transfer pipe (23) is connected between the first tubular fluid channel (16) and the syphon inlet (21) (see Figure 2 and 3 together). This transfer pipe (23) is the continuation of the exchanger pipe (31) that comes out of the above-described condensing heat exchanger (30) and is connected to the condensate liquid in it. The exchanger pipe (31) positioned between the condensing heat exchanger (30) and the condensing fluid inlet (11) so that the condensed fluid is transported to the first tubular fluid channel (16).

On the other inlet of the drainage apparatus (10), an extension pipe (15) is shown between the second tubular fluid channel (17) and the syphon inlet (21) in order to carry the water accumulated in the boiler to the accumulation tank (40), passing through a tank pipe (41), to the siphon mechanism (20). The tank pipe (41) is disposed between the accumulation tank (40) and the second tubular fluid channel (17) connected to the side of the first tubular fluid channel (16). In detail, the tank pipe (41) is disposed between the accumulation tank (40) and the accumulated fluid inlet (13) of the drainage apparatus (10). This extension pipe (15) is the continuation of the existing tank pipe (41) in order to carry the boiler water to the syphon mechanism (20) after it accumulates in the boiler mentioned above and fills the accumulation tank (40). By this means, the fluids coming from two different sources pass through these stages and are discharged out of the syphon discharge (22), which is the end of the syphon mechanism (20).

## Claims

1. A drainage apparatus (10) for condensing boilers (1) **characterized by** comprising
- a first tubular fluid channel (16) comprising a condensing fluid inlet (11) connected to condensing heat exchanger (30) at one opening of said first tubular fluid channel (16) and a condensing fluid outlet (12) connected to a syphon mechanism (20) at the other opening of said first tubular fluid channel (16),
- a second tubular fluid channel (17) which is connected from the side of said first tubular fluid channel (16) to the interior of said first tubular fluid channel (16) and extends parallel to the first tubular fluid channel (16) inside the first tubular fluid channel (16).

2. The drainage apparatus (10) according to claim 1, wherein the second tubular fluid channel (17) comprises
- an accumulated fluid inlet (13) communicated with an accumulation tank (40), and
- an accumulated fluid outlet (14) communicated with the syphon mechanism (20).

3. The drainage apparatus (10) according to claims 1 or 2, wherein it comprises an exchanger pipe (31) positioned between the condensing heat exchanger (30) and the condensing fluid inlet (11) so that the condensed fluid is transported to the first tubular fluid channel (16).

4. The drainage apparatus (10) according to claims 1 to 3, wherein the first tubular fluid channel (16) and the second tubular fluid channel (17) being concentric.

5. The drainage apparatus (10) according to claims 1 to 4, wherein it comprises an extension pipe (15) positioned as one end of which is connected to the accumulated fluid outlet (14) and the other end is immersed in the fluid in the syphon mechanism (20) so that the rainwater coming from the accumulation tank (40) is transmitted to the fluid accumulated in the syphon mechanism (20).

6. The drainage apparatus (10) according to claims 1 to 5, wherein it comprises a transfer pipe (23) positioned between the condensing fluid outlet (12) and the syphon mechanism (20) so that the condensed fluid is transported to the syphon mechanism (20).

7. A condensing boiler (1), for condensing water vapor in the exhaust gases, comprising a condensing heat exchanger (30), an accumulation tank (40), and a syphon mechanism (20) **characterized by** comprising a drainage apparatus (10) according to any one of claims 1 to 6.
